# EUROPÄISCHE PATENTSCHRIFT

(11) **EP 2 097 278 B1**
(45) Veröffentlichungstag und Bekanntmachung des Hinweises auf die Patenterteilung: **23.12.2015**
(21) Anmeldenummer: 07819050.1
(22) Anmeldetag: 17.10.2007
(51) Int. Cl.: B60G 17/015, G01G 19/10

(54) **VERFAHREN ZUR KALIBRIERUNG DER ACHSLASTANZEIGE EINES ECAS-NIVEAUREGELSYSTEMS**
METHOD FOR CALIBRATING THE AXLE LOAD DISPLAY OF AN ECAS LEVEL CONTROL SYSTEM
PROCÉDÉ D'ÉTALONNAGE DE L'INDICATION DE CHARGE D'ESSIEU D'UN SYSTÈME DE RÉGULATION DE NIVEAU ECAS

(30) Priorität: 22.11.2006 DE 102006054977
(43) Veröffentlichungstag der Anmeldung: 09.09.2009
(73) Patentinhaber: WABCO GmbH, 30453 Hannover (DE)
(72) Erfinder: GOCZ, Reinhard, 30926 Seelze (DE); KLEEN, Berend, 30161 Hannover (DE); LUCAS, Johann, 31319 Sehnde (DE); ZIMPEL, Dieter, 31535 Neustadt (DE)
(74) Vertreter: Lauerwald, Jörg
(86) Internationale Anmeldenummer: PCT/EP2007/008982
(87) Internationale Veröffentlichungsnummer: WO 2008/061597

(56) Entgegenhaltungen:
- EP-A- 0 625 697
- DE-A1- 3 906 987
- DE-A1- 19 731 769
- DE-U1- 9 415 153
- US-A- 4 783 089
- SCHONFELD K H ET AL: "ELECTRONICALLY CONTROLLED AIR SUSPENSION (ECAS) FOR COMMERCIAL VEHICLES" COMMERCIAL VEHICLE SUSPENSIONS, STEERING SYSTEMS, AND TRACTION, WARRENDALE, SAE, US, 1991, Seiten 15-24, XP000292479

## Beschreibung

Die Erfindung betrifft ein Verfahren zur Kalibrierung der Achslastanzeige eines ECAS-Niveauregelsystems.

Ein derartiges Niveauregelsystem wird bei pneumatisch gefederten Fahrzeugen, insbesondere Nutzfahrzeugen oder auch Pkw, eingesetzt.

Die Druckschrift SAE Paper 912671, Electronically Controlled Air Suspension (ECAS) for commercial vehicles, Schönfeld, Geiger, Hesse, WABCO Westinghouse, Seiten 15-24, beschreibt eine Vorrichtung zur elektronischen Regelung einer Luftfederungsanlage für Nutzfahrzeuge, kurz ECAS genannt. Die Luftfederungsanlage weist ein Bedienelement auf, mit dem die Höhe des Fahrzeugrahmens gegenüber der Fahrbahnoberfläche verstellt werden kann. Zur Erhöhung des Fahrzeugniveaus wird Luft aus einem Druckluftspeicher oder von einem Kompressor in die Luftfedern der entsprechenden Fahrzeugachse überführt. Zur Reduzierung des Niveaus wird Luft aus den Luftfedern in die Umgebung abgelassen. Die Beladung des Nutzfahrzeuges kann über den Luftdruck in den Luftfederbälgen und die durch Höhensensoren ermittelte Fahrzeughöhe bestimmt werden. Unter Punkt 6 der Beschreibung wird die Integration einer Dämpferregelung mit der elektronisch regelbaren Luftfederungsanlage zu einem semi-aktiven Federungssystem erläutert, wobei insbesondere die folgenden Komponenten einer elektronisch regelbaren Luftfederungsanlage zusätzlich bereitgestellt bzw. dort integriert werden müssten. Dies sind Lenkwinkel und Lenkwinkelgeschwindigkeit mittels Lenkwinkelsensor, Abbremsung durch Bremsdrucksensor-Schalter und große Änderungen der Traktionskraft mittels der Position des Gaspedals.

Die Druckschrift EP0625697A1 beschreibt ein Wägesystem zur Durchführung von genauen Messungen des Fahrzeuggewichtes über einen Bereich von Fahrzeuggewichten, welches zur Ermittlung der genauen Nutzlast des Fahrzeuges zusätzlich und nachträglich installiert werden kann. Das Wägesystem umfasst eine separate Verarbeitungs- und Anzeigeeinheit in einem Kabinenteil des Fahrzeuges und Sensoren an den Achsbaugruppen, die elektrische Signale erzeugen, die auf ein Gewicht des Fahrzeuges und eine Last bezogen sind. Die Sensoren sind über Kabelverbindungen mit der Verarbeitungs- und Anzeigeeinrichtung verbunden. Nach der Installation des Wägesystems im Fahrzeug ist es erforderlich, das Wägesystem zu kalibrieren. Dazu wird das Fahrzeug-Leergewicht mittels einer geeichten Bodenwaage ermittelt und der angezeigte Wert des Wägesystems kann durch den Fahrer dem ermittelten Gewicht zugeordnet werden. Danach ist das Fahrzeug zu beladen, insbesondere mit voller Gewichtsbeladung (Volllast), um einen zweiten Gewichtswert mit Hilfe der geeichten Bodenwaage zu ermitteln, wobei dieser zweite Gewichtswert durch den Fahrer einem zweiten angezeigten Wert der Verarbeitungs- und Anzeigeeinheit zugeordnet werden kann. Der Fahrer hat über spezielle Eingabetasten der Verarbeitungs- und Anzeigevorrichtung die Möglichkeit, das durch die geeichte Bodenwaage ermittelte Gewicht in die Verarbeitungs- und Anzeigeeinrichtung einzugeben und den entsprechenden Sensorwerten zuzuordnen. Wenn sowohl das erste Gewicht und das zweite Gewicht eingegeben, d.h zugeordnet, wurden, bestimmt die Verarbeitungs- und Anzeigeeinrichtung den Verhältniswert und den Gesamtwert der ungefederten Massen, insbesondere der ausgewählten Achsbaugruppe. Dabei wird das erste Gewicht (Leer) vom zweiten Gewicht (Voll) subtrahiert und man teilt diese Gewichtsdifferenz durch die Sensorsignaldifferenz aus der Subtraktion von erstem Sensorsignalwert vom zweiten Sensorsignalwert. Daraus ergibt sich ein Verhältniswert R, mit dem sich der Gewichtswert der ungefederten Masse bestimmen lässt. Sobald der Verhältniswert und der Gesamtwert der ungefederten Massen für eine Achsbaugruppe bestimmt worden sind, ist es nicht notwendig, den Kalibriervorgang zu wiederholen.

Bei ECAS-Niveauregelsystemen können in der Regel vom Benutzer an der ECAS-Bedieneinheit die Einstellwerte und aktuellen Messwerte ausgelesen und entsprechende Einstellwerte eingegeben werden. Weiterhin werden auch Änderungen der Kalibriereinstellungen der Achslastanzeige über die Bedieneinheit eingegeben. Hierzu wird an der Anzeigeeinrichtung bzw. am Display die Achslastanzeige ausgewählt und angezeigt. Die Anzeigeeinheit sendet zu der anzeigten Achslast eine Anforderung bezüglich der Achslastdaten über die CAN- Datenanbindung an das Steuergerät; das ECAS- Steuergerät lässt nachfolgend eine Veränderung dieser Werte zu.

Diese übertragene CAN-Botschaft ist jedoch nicht genormt, so dass ein derartiges Verfahren nicht in Fahrzeugen mit SAE-genormter CAN-Verbindung nutzbar ist.

Weiterhin kann der Aufruf der Kalibrierfunktion auch versehentlich erfolgen, so dass der Fahrer gegebenenfalls nachfolgend Änderungswerte eingibt und bestätigt, die fehlerhaft sind und somit nachfolgend zu einer fehlerhaften Regelung führen können.

Der Erfindung liegt die Aufgabe zugrunde, eine Kalibrierung der Achslastanzeige zu ermöglichen, die Fehlbedienungen weitestgehend ausschließt und ohne wesentlichen apparativen Aufwand sowie ohne wesentlichen Software-Aufwand realisierbar ist.

Diese Aufgabe wird durch ein Verfahren nach Anspruch 1 gelöst. Die Unteransprüche beschreiben bevorzugte Weiterbildungen.

Erfindungsgemäß wird somit die ECAS-Bedieneinheit zur Aktivierung des Änderungsmodus verwendet. Hierbei sind keine zusätzlichen Tasten oder Schalter erforderlich, um den Änderungsmodus zu aktivieren. Der Benutzer gibt eine speziell hierfür vorgesehene Tastenkombination in die Bedientasten des Bedienfeldes ein und startet hierdurch den Änderungsmodus.

Indem eine derartige Tastenkombination vorgesehen ist, kann ein zufälliges Aktivieren des Änderungsmodus bereits weitestgehend ausgeschlossen werden. Weiterhin ist vorteilhafterweise erfindungsgemäß eine der Tasten für einen vorgegebenen Zeitraum zu drücken, z.B. über fünf Sekunden, so dass ein zufälliges Berühren nicht relevant ist. Diese Taste kann insbesondere die Stopptaste sein, da der Benutzer die Stopptaste - anders als z.B. die Heben-/Senken-Tasten - in der Regel nicht über einen längeren Zeitraum drückt.

Auf die Tastenkombination hin erfolgt erfindungsgemäß vorzugsweise zunächst eine Rückmeldung des Steuergerätes, so dass der Benutzer erkennt, dass er den Aktivierungsmodus gestartet hat und nachfolgende Eingaben Änderungen bewirken. Hierbei kann der Benutzer z.B. zunächst die relevanten Achsen auswählen und nachfolgend die Dateneingabe über die Heben-/Senken-Tasten vornehmen, d.h. die bisher gespeicherten Werte entsprechend verringern oder vergrößern.

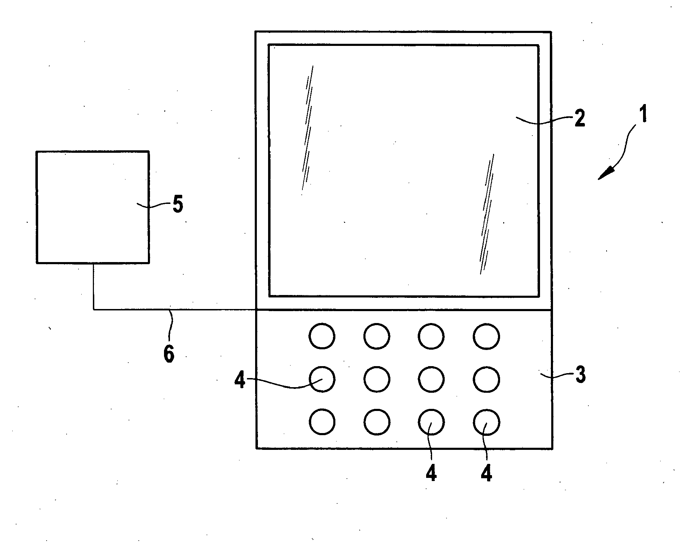

Die Erfindung wird im Folgenden anhand der beiliegenden Zeichnung an einer Ausführungsform erläutert. Die Figur zeigt eine ECAS-Bedieneinheit.

Eine ECAS-Bedieneinheit 1 ist im Cockpit eines Nutzfahrzeuges mit Balgfedern zur pneumatischen Niveauregulierung vorgesehen. Die ECAS-Bedieneinheit 1 weist eine Anzeigeeinrichtung (Display) 2 und ein Bedienfeld 3 mit Bedientasten 4, z.B. zwölf verschiedenen Bedientasten 4, auf. Als Bedientasten 4 sind in der Regel unter anderem Achsvorwahltasten, Heben-/Senken-Tasten, Memory-Tasten, Normalniveau-Tasten und eine Stopp-Taste vorgesehen. Die ECAS-Bedieneinheit 1 ist über eine Datenverbindung 6 mit einem Steuergerät 5 verbunden.

Der Benutzer kann über das Bedienfeld 3 gespeicherte Daten sowie aktuelle Daten, d.h. Druckwerte in den Luftbälgen und Niveaustellungen, abrufen. Weiterhin kann er die Niveaueinstellungen über die Achswahltaste und die Heben-/Senken-Taste verändern. Hierbei führt das ECAS-Steuergerät 5 im Allgemeinen eine selbstständige Regelung durch, insbesondere eine Traktionsregelung oder eine Überlastregelung.

Erfindungsgemäß wird die Kalibriereinstellung der Achslastanzeige über eine Tastenkombination mehrerer Bedientasten 4 des Bedienfeldes 3 verändert. Falls eine Änderung der Kalibrierung vorzunehmen ist', betätigt der Benutzer - im Allgemeinen der Fahrer - in dem Bedienfeld 3 zunächst die Liftachstaste 4, danach hält er für fünf Sekunden die Stopptaste 4 betätigt, bis aus der Anzeigeeinrichtung 2 eine Rückmeldung, z.B. durch ein Lauflicht der Anzeige- Kontrollleuchten, beginnt.

Nachfolgend wählt der Benutzer über die Achswahltasten die zu kalibrierende Achse aus, so dass nachfolgend nur noch die entsprechende Kontrollleuchte der ausgewählten Achse, nicht jedoch die weiteren Kontrollleuchten blinken.

Der Fahrer kann nunmehr durch die Heben-/Senken-Tasten 4 den in der Anzeigeeinrichtung 2 angezeigten Wert der Achslast so verändern, dass er dem tatsächlichen Wert entspricht.

Nachfolgend wird dieser Änderungsmodus durch eine entsprechende Tasteneingabe, z.B. die Stopptaste 4, beendet, so dass die veränderten Kalibrierwerte gespeichert bleiben.

## Patentansprüche

1. Verfahren zur Kalibrierung der Achslastanzeige eines ECAS-Niveauregelsystems, mit mindestens folgenden Schritten:
Eingabe einer Tastenkombination in die Bedientasten (4) eines Bedienfeldes (3) einer ECAS-Bedieneinheit (1) zur Aktivierung des Änderungsmodus, und
Eingabe von Änderungsdaten in die Bedientasten (4) der ECAS-Bedieneinheit (1),
wobei die Tastenkombination frei von für die Aktivierung des Änderungsmodus speziell vorgesehenen Tasten ist,
wobei eine der Tasten für einen vorgegebenen Zeitraum zu drücken ist.

2. Verfahren nach Anspruch 1, **dadurch gekennzeichnet, dass** eine Stopptaste (4) des Bedienfeldes (3) für einen vorgegebenen Zeitraum gedrückt wird.

3. Verfahren nach einem der vorherigen Ansprüche, **dadurch gekennzeichnet, dass** nach Eingabe der Tastenkombination aus der ECAS-Bedieneinheit (1) eine Rückmeldung kommt und daraufhin die ein oder mehreren relevanten Achsen auswählbar sind.

4. Verfahren nach Anspruch 3, **dadurch gekennzeichnet, dass** die Kalibrierwerte durch Heben-/Senken-Tasten (4) des Bedienfeldes (3) geändert werden.

5. Verfahren nach einem der vorherigen Ansprüche, **dadurch gekennzeichnet, dass** der Änderungsmodus zur Änderung der Achslastkalibrierung über das Bedienfeld (3) beendet wird.

## Claims

1. Method for calibrating the axle load display of an ECAS level control system, having at least the following steps of:
inputting a key combination into the operating keys (4) of an operating panel (3) of an ECAS operating unit (1) in order to activate the change mode, and
inputting change data into the operating keys (4) of the ECAS operating unit (1),
the key combination being free of keys specially provided for activating the change mode,
one of the keys being able to be pressed for a predefined period.

2. Method according to Claim 1, **characterized in that** a stop key (4) of the operating panel (3) is pressed for a predefined period.

3. Method according to one of the preceding claims, **characterized in that**, after the key combination has been input, the ECAS operating unit (1) provides feedback and the one or more relevant axles can then be selected.

4. Method according to Claim 3, **characterized in that** the calibration values are changed by means of raising/lowering keys (4) of the operating panel (3).

5. Method according to one of the preceding claims, **characterized in that** the change mode for changing the axle load calibration is terminated via the operating panel (3).

## Revendications

1. Procédé d'étalonnage de l'indication de charge d'essieu d'un système de régulation de niveau ECAS, comprenant au moins les étapes suivantes :
saisie d'une combinaison de touches dans les touches de commande (4) d'un champ de commande (3) d'une unité de commande ECAS (1) pour activer le mode de variation, et
saisie de données de variation dans les touches de commande (4) de l'unité de commande ECAS (1),
la combinaison de touches étant exempte de touches prévues spécialement pour l'activation du mode de variation,
l'une des touches devant être pressée pendant un période de temps prédéfinie.

2. Procédé selon la revendication 1, **caractérisé en ce qu'**une touche d'arrêt (4) du champ de commande (3) est pressée pendant une période de temps prédéfinie.

3. Procédé selon l'une quelconque des revendications précédentes, **caractérisé en ce qu'**après la saisie de la combinaison de touches, un avertissement en retour arrive de l'unité de commande ECAS (1) et ensuite le ou les essieux concernés peuvent être sélectionnés.

4. Procédé selon la revendication 3, **caractérisé en ce que** les valeurs d'étalonnage sont modifiées par les touches haut/bas (4) du champ de touches (3).

5. Procédé selon l'une quelconque des revendications précédentes, **caractérisé en ce que** le mode de variation pour faire varier l'étalonnage de la charge à l'essieu par le biais du champ de commande (3) est terminé.
